# EUROPEAN PATENT APPLICATION

(11) **EP 4 779 787 A1**
(43) Date of publication of application: **22.07.2026**
(21) Application number: 25861773.7
(22) Date of filing: 24.01.2025
(51) Int. Cl.: H01M 50/491

(54) **COMPOSITE SEPARATOR AND LITHIUM BATTERY**

(30) Priority: 27.11.2024 CN 202422910229 U
(71) Applicant: Eve Energy Co., Ltd, Huizhou, Guangdong 516006 (CN)
(72) Inventor: WU, Jiahui, Huizhou, Guangdong 516000 (CN); TAN, Yaning, Huizhou, Guangdong 516000 (CN)
(74) Representative: Michalski Hüttermann & Partner mbB
(86) International application number: PCT/CN2025/074823
(87) International publication number: WO 2026/113139

(57) **Abstract**

A composite separator is disclosed in the present disclosure. The composite separator includes a first separator and a second separator disposed in sequence, the first separator is a nonwoven separator or a cellulose separator, and the second separator is a fiberglass separator; and a porosity of the first separator is not higher than a porosity of the second separator.

## Description

### CROSS-REFERENCE TO RELATED APPLICATION(S)

This application claims priority to Chinese Patent Application No. 2024229102290, filed with the Chinese Patent Office on November 27, 2024, the entire disclosure of which is hereby incorporated by reference.

### TECHNICAL FIELD

The present disclosure relates to the field of lithium battery technology, and particularly, to a composite separator and a lithium battery.

### BACKGROUND

At present, in global various application scenarios, special scenarios, such as in high-latitude regions and in extreme weather condition of ice and snow, have high requirements on the pulse of a battery in low-temperature environments: the battery is required to be maintained in application scenarios with temperature of -40°C for 5 hours of pulse discharge. At present, an internal space of a lithium battery is limited, an addition of electrolyte is limited, and a volume of a positive electrode gradually expands during a discharge process, and the expanding positive electrode can absorb the rest free electrolyte. In relevant studies, it has been found that the separator in the battery not only plays the role of separating the positive electrode and a negative electrode to avoid a short circuit caused by a contact of the two electrodes, transporting lithium ions, and ensuring safety of the battery, but also plays an important role in increasing an electrolyte retention of the battery and improving a low-temperature discharge performance of the battery.

### Technical Problems

At present, a mainly-used single polypropylene separator has a weak competitive adsorption capacity for the electrolyte, which may lead to situations such as insufficient free electrolyte inside the battery in later stages of discharge, difficulty in ion migration and fluctuations in discharge curve in low-temperature and high-current pulse discharge application scenarios, etc. Meanwhile, the single polypropylene separator has a limited absorption capacity for the electrolyte, which cannot effectively increase the electrolyte retention of the battery, thus affecting a low-temperature pulse and a low-temperature discharge capacity of the battery.

### SUMMARY

### Technical Solutions

In a first aspect, a composite separator is provided in the present disclosure, where the composite separator includes a first separator and a second separator disposed in sequence, where the first separator is a nonwoven separator or a cellulose separator, and the second separator is a fiberglass separator; and a porosity of the first separator is not higher than a porosity of the second separator.

In a second aspect, a lithium battery is provided in the present disclosure, where the lithium battery includes the aforementioned composite separator.

### Beneficial Effects

In the composite separator provided in the present disclosure, the nonwoven separator has a three-dimensional network structure, which provides the nonwoven separator with a good electrolyte storage effect. A surface of the cellulose separator contains hydrophilic functional groups such as hydroxyl groups, which have good electrolyte affinity and provide stable transmission channel for lithium ions and electrons. A surface of the fiberglass separator contains abundant hydrophilic functional groups such as the hydroxyl groups, and a hydrogen bond structure of silicate in the fiberglass separator enhances a hydrophilicity of the fiberglass separator. Therefore, the fiberglass separator has a high electrolyte wetting rate and a high electrolyte uptake rate, can quickly uptake the electrolyte, and is conducive to competing with the expanding positive electrode sheet for the electrolyte in the later stage of discharge, avoiding difficulty in ion migration in low-temperature and high-current pulse discharge application scenarios, and improving the low-temperature pulse and the low-temperature discharge capacity of the battery. Moreover, the fiberglass separator has a good mechanical strength, which can effectively improve mechanical properties and a stability of the composite separator, enhancing a safety performance of the lithium battery.

Based on the aforementioned, by assembling the first separator (nonwoven separator or cellulose separator) with the second separator (fiberglass separator) as the composite separator, and regulating porosities of the first separator and the second separator, the first separator and the second separator can be in synergy, thus on the premise of ensuring that the composite separator has good mechanical properties, an electrolyte wettability of the composite separator is improved effectively, thereby enhancing the low-temperature pulse and lithium-ion transport kinetics of the lithium battery using the composite separator.

### BRIEF DESCRIPTION OF THE DRAWINGS

FIG. 1 is a schematic structural diagram of composite separators prepared in Embodiments 1 to 9 and Comparative Embodiments 3 to 5.
FIG. 2 is a schematic structural diagram of a separator prepared in Comparative Embodiment 1.
FIG. 3 is a schematic structural diagram of a separator prepared in Comparative Embodiment 2.

In the aforementioned accompanying drawings, corresponding relationships between technical features and reference signs are as follows: 1 denotes a first separator, and 2 denotes a second separator.

### DETAILED DESCRIPTION

In some implementations, a porosity of a first separator is within a range of 50% to 90%, and a porosity of a second separator is within a range of 50% to 90%. The porosity of the first separator may be 50%, 60%, 70%, 80%, 90%, etc., but is not limited to listed numerical values, and the same is also applicable to other unlisted numerical values within the range. The porosity of the second separator may be 50%, 60%, 70%, 80%, 90%, etc., but is not limited to the listed numerical values, and the same is also applicable to other unlisted numerical values within the range.

In some implementations, the porosity of the first separator is within a range of 50% to 70%, and the porosity of the second separator is within a range of 80% to 90%. By regulating the porosity of the first separator, on the premise of ensuring that the first separator has a good electrolyte retention capacity, a mechanical strength of the first separator can be improved to avoid an excessively-high porosity of the first separator. The excessively-high porosity of the first separator leads to mechanical properties degradation and a puncture resistance strength degradation of the first separator, which results in a deterioration in a safety performance of the battery. The second separator has good mechanical properties. By regulating the porosity of the second separator, on the premise of ensuring that the second separator has a good mechanical strength, an electrolyte wettability and an electrolyte storage capacity can be improved to reduce the risk of poor electrolyte wettability caused by an excessively-low porosity of the second separator. Thus, the composite separator prepared by assembling the first separator and the second separator has excellent electrolyte retention capacity, overall stability, and mechanical properties, thereby comprehensively improving lithium-ion transport kinetics and the safety performance of a lithium battery applying it.

In some implementations, the fiberglass separator includes glass fiber filaments, where a length-to-diameter ratio of the glass fiber filaments is within a range of (500 - 2000) : 1. The length-to-diameter ratio of the glass fiber filaments can be 500: 1, 1000: 1, 1500:1, 2000:1, etc., but is not limited to the listed numerical values, and the same is also applicable to other unlisted numerical values within the range. By regulating the length-to-diameter ratio of the glass fiber filaments, it is conducive to improving an overall strength of the composite separator and reducing a local stress concentration. At the same time, it is also conducive to improving a dispersity and a uniformity of the glass fiber filaments, so that good electrolyte wettability is maintained, thereby enhancing a comprehensive performance of the composite separator.

In some implementations, a mean diameter of the glass fiber filaments is within a range of 0.5 µm to 8 µm, and a mean length of the glass fiber filaments is within a range of 0.5 mm to 2 mm. The mean diameter of the glass fiber filaments can be 0.5µm, 2µm, 4µm, 6µm, 8µm, etc., but is not limited to the listed numerical values, and the same is also applicable to other unlisted numerical values within the range of 0.5 µm to 8 µm. The mean length of the glass fiber filaments can be 0.5 mm, 1 mm, 2 µm, etc., but is not limited to listed numerical values, and the same is also applicable to other unlisted numerical values within the range of 0.5 mm to 2 mm.

In some implementations, a ratio of a thickness of the first separator to a thickness of the second separator is within a range of (0.05 - 0.2) : (0.1 - 0.4). The ratio of the thickness of the first separator to the thickness of the second separator can be 0.05:0.1, 0.1:0.1, 0.05:0.4, 0.1:0.4, etc., but is not limited to the listed numerical values, and the same is also applicable to other unlisted numerical values within the range. By regulating the ratio of thickness of the first separator to the thickness of the second separator, on the premise of ensuring that the composite separator has a good mechanical strength, the electrolyte wettability and the electrolyte retention capacity of the composite separator can be improved.

In some implementations, the thickness of the first separator is within a range of 0.05 mm to 0.2 mm, and the thickness of the second separator is within a range of 0.1 mm to 0.4 mm. The thickness of the first separator can be 0.05 mm, 0.1 mm, 0.2 mm, etc., but is not limited to the listed numerical values, and the same is also applicable to other unlisted numerical values within the range of 0.025 mm to 0.2 mm. The thickness of the second separator can be 0.1 mm, 0.2 mm, 0.3 mm, 0.4 mm, etc., but is not limited to the listed values, and the same is also applicable to other unlisted numerical values within the range of 0.1 mm to 0.4 mm.

In some implementations, the first separator is a nonwoven separator, and the nonwoven separator is a polyethylene (PE) nonwoven separator, a polypropylene (PP) nonwoven separator, a polyimide (PI) nonwoven separator, or a polyethylene terephthalate (PET) nonwoven separator.

In an aspect of the present disclosure, the first separator is a cellulose separator, and the cellulose separator is a cellulose acetate separator, a methylcellulose separator, an ethylcellulose separator, a carboxymethylcellulose separator, or a hydroxyl cellulose separator.

In some implementations, the lithium battery further includes a manganese dioxide positive electrode sheet and a lithium metal negative electrode sheet.

### Embodiment 1

A composite separator is provided in the present embodiment, and a method for preparing the composite separator includes the following.

### (1) Preparation of First Separator 1

With polypropylene as raw material, a polypropylene nonwoven separator is prepared as a first separator 1 by a melt-blown process. A thickness of the first separator 1 is 0.1 mm, and a porosity of the first separator 1 is 70%.

### (2) Preparation of Second Separator 2

With borosilicate glass fiber filaments (with a mean diameter of 1µm and a mean length of 1.5 mm) as raw materials, a fiberglass separator is prepared as a second separator 2 by a wet-laid process. A thickness of the second separator 2 is 0.2 mm, and a porosity of the second separator 2 is 90%.

### (3) Preparation of Composite Separator

Assembling the first separator and the second by overplaying and blanking.

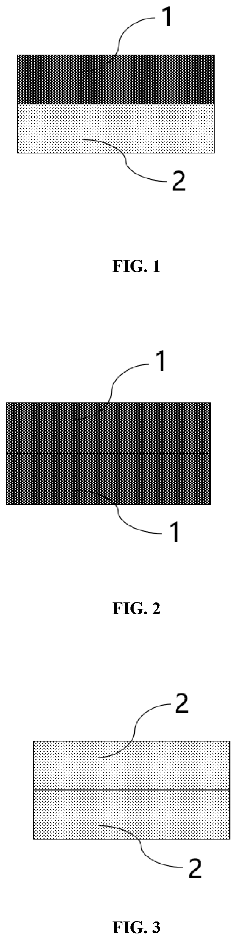

The composite separator, as illustrated in FIG. 1, is prepared in the present embodiment, where the composite separator includes the first separator 1 and the second separator 2 disposed in sequence in a thickness direction in structure.

### Embodiment 2

The present embodiment makes reference to Embodiment 1 for preparing a composite separator. The present embodiment is different from Embodiment 1 in that: in the present embodiment, a porosity of a first separator 1 is 50%. Except for the above differences, the materials and process operations adopted in the present embodiment are strictly consistent with those in Embodiment 1.

### Embodiment 3

The present embodiment makes reference to Embodiment 1 for preparing a composite separator. The present embodiment is different from Embodiment 1 in that: in the present embodiment, a porosity of a first separator 1 is 90%. Except for the above differences, the materials and process operations adopted in the present embodiment are strictly consistent with those in Embodiment 1.

### Embodiment 4

The present embodiment makes reference to Embodiment 1 for preparing a composite separator. The present embodiment is different from Embodiment 1 in that: in the present embodiment, a porosity of a second separator 2 is 70%. Except for the above differences, the materials and process operations adopted in the present embodiment are strictly consistent with those in Embodiment 1.

### Embodiment 5

The present embodiment makes reference to Embodiment 1 for preparing a composite separator. The present embodiment is different from Embodiment 1 in that: in the present embodiment, a porosity of a second separator 2 is 80%. Except for the above differences, the materials and process operations adopted in the present embodiment are strictly consistent with those in Embodiment 1.

### Embodiment 6

The present embodiment makes reference to Embodiment 1 for preparing a composite separator. The present embodiment is different from Embodiment 1 in that: in the present embodiment, borosilicate glass fiber filaments used for preparing a second separator 2 have a mean diameter of 0.5 µm and a mean length of 1.5 mm (a length-to-diameter ratio is 3000: 1). Except for the above differences, the materials and process operations adopted in the present embodiment are strictly consistent with those in Embodiment 1.

### Embodiment 7

The present embodiment makes reference to Embodiment 1 for preparing a composite separator. The present embodiment is different from Embodiment 1 in that: in the present embodiment, borosilicate glass fiber filaments used for preparing a second separator 2 have a mean diameter of 2 µm and a mean length of 1.5 mm (a length-to-diameter ratio is 750:1). Except for the above differences, the materials and process operations adopted in the present embodiment are strictly consistent with those in Embodiment 1.

### Embodiment 8

The present embodiment makes reference to Embodiment 1 for preparing a composite separator. The present embodiment is different from Embodiment 1 in that: in the present embodiment, a thickness of a first separator 1 is 0.2 mm, a thickness of a second separator 2 is 0.1 mm. Except for the above differences, the materials and process operations adopted in the present embodiment are strictly consistent with those in Embodiment 1.

### Embodiment 9

The present embodiment makes reference to Embodiment 1 for preparing a composite separator. The present embodiment is different from Embodiment 1 in that: in the present embodiment, an ethylcellulose separator replaces a polypropylene nonwoven separator in Embodiment 1 as a first separator 1. Except for the above differences, the materials and process operations adopted in the present embodiment are strictly consistent with those in Embodiment 1.

A preparing of the ethylcellulose separator in the present embodiment includes the following: with ethylcellulose as raw material, the ethylcellulose separator is prepared as the first separator 1 by a wet-laid process. A thickness of the first separator 1 is 0.1 mm, and a porosity of the first separator 1 is 70%.

### Comparative Embodiment 1

The present comparative embodiment makes reference to Embodiment 1 for preparing a composite separator. The present comparative embodiment is different from Embodiment 1 in that: in the present comparative embodiment, during the process of preparing the composite separator, a first separator 1 with the same thickness as a first separator 1 in Embodiment 1 replaces a second separator 2 in Embodiment 1. Except for the aforementioned differences, the materials and process operations adopted in the present comparative embodiment are strictly consistent with those in Embodiment 1.

The composite separator (two layers of the first separator), as illustrated in FIG. 2, is prepared in the present comparative embodiment, where the structure of the composite separator includes the first separator 1 and the first separator 1 in a thickness direction.

### Comparative Embodiment 2

The present comparative embodiment makes reference to Embodiment 1 for preparing a composite separator. The present comparative embodiment is different from Embodiment 1 in that: in the present comparative embodiment, during the process of preparing the composite separator, a second separator 2 with the same thickness as a second separator 2 in Embodiment 1 replaces a first separator 1 in Embodiment 1. Except for the aforementioned differences, the materials and process operations adopted in the present comparative embodiment are strictly consistent with those in Embodiment 1.

The composite separator (two layers of the second separator), as illustrated in FIG. 3, is prepared in the present comparative embodiment, where the structure of the composite separator includes the second separator 2 and the second separator 2 in a thickness direction.

### Comparative Embodiment 3

The present comparative embodiment makes reference to Embodiment 1 for preparing a composite separator. The present comparative embodiment is different from Embodiment 1 in that: in the present comparative embodiment, a porosity of a first separator 1 is 45 %. Except for the aforementioned differences, the materials and process operations adopted in the present comparative embodiment are strictly consistent with those in Embodiment 1.

### Comparative Embodiment 4

The present comparative embodiment makes reference to Embodiment 1 for preparing a composite separator. The present comparative embodiment is different from Embodiment 1 in that: in the present comparative embodiment, a porosity of a first separator 1 is 95 %. Except for the aforementioned differences, the materials and process operations adopted in the present comparative embodiment are strictly consistent with those in Embodiment 1.

### Comparative Embodiment 5

The present comparative embodiment makes reference to Embodiment 1 for preparing a composite separator. The present comparative embodiment is different from Embodiment 1 in that: in the present comparative example, a porosity of a second separator 2 is 45 %. Except for the aforementioned differences, the materials and process operations adopted in the present comparative embodiment are strictly consistent with those in Embodiment 1.

### Test Embodiment 1

### 1. Testing Subjects

A CR2032 battery is prepared with composite separators prepared in Embodiments 1 to 9 and Comparative Embodiments 1 to 5. The composite separators prepared in Embodiments 1 to 9 and Comparative Embodiments 1 to 5, and the CR2032 battery are testing subjects for the present test embodiment.

### 2. Testing Objects

(1) Electrolyte Retention: Retention = Weight of Battery After Assembly - Weight of Cell Before Liquid Injection.
(2) Low-temperature Pulse: Take 5 pieces (pcs) of batteries and place them in a discharge box at a low-temperature of -40°C for 0.5 hours of thermal insulation. Then start the discharge box and discharge according to the following mode: discharge at 15 mA for 6ms, repeat the aforementioned discharge operation for 5 times after an interval of 50ms, and stand by for 20s. The aforementioned process operations form one cycle. Continue to repeat the cycle for 5 hours. Test the load voltage of the batteries at -40°C at the beginning and after 5 hours of pulse discharging.
(3) Mechanical Properties: Take the composite separators with a width of 50 mm and a length of 150 mm prepared in Embodiments 1 to 9 and Comparative Embodiments 1 to 9, and test the mechanical strength of the tested subjects with a universal material testing machine. The mechanical strength affects a cutting speed of the separator during battery production, and the mechanical strength is mainly determined by the first separator or the second separator with a lower tensile strength in the composite separator.

### 3. Testing Results

**Table 1: Performance Testing Results of Embodiments 1 to 9 and Comparative Embodiments 1 to 5**

| Group | Electrolyte Retention | Voltage (V) at -40°C with 0 hour pulse discharging | Voltage (V) at -40°C with 5 hour pulse discharging | Mechanical Strength of the First Separator 1 (n/50mm) | Mechanical Strength of the Second Separator 2 (n/50mm) |
|---|---|---|---|---|---|
| Embodiment 1 | 0.2712 | 2.6448 | 2.2484 | 24 | 62 |
| Embodiment 2 | 0.2467 | 2.3346 | 1.7374 | 32 | 62 |
| Embodiment 3 | 0.2708 | 2.6347 | 2.2438 | 16 | 62 |
| Embodiment 4 | 0.2381 | 2.2671 | 1.6983 | 24 | 81 |
| Embodiment 5 | 0.2738 | 2.6455 | 2.2387 | 24 | 30 |
| Embodiment 6 | 0.2664 | 2.6433 | 2.2021 | 24 | 49 |
| Embodiment 7 | 0.2699 | 2.5978 | 2.1246 | 24 | 73 |
| Embodiment 8 | 0.2704 | 2.6419 | 2.2198 | 36 | 34 |
| Embodiment 9 | 0.2693 | 2.6015 | 2.1089 | 60 | 62 |
| Comparative Embodiment 1 | 0.2049 | 2.0463 | 1.315 | 24 | / |
| Comparative Embodiment 2 | 0.2211 | 2.1426 | 1.5819 | / | 62 |
| Comparative Embodiment 3 | 0.2167 | 2.0641 | 1.5263 | 37 | 77 |
| Comparative Embodiment 4 | 0.2708 | 2.6347 | 2.2438 | 9 | 62 |
| Comparative Embodiment 5 | 0.2281 | 2.1674 | 1.5489 | 24 | 89 |

Testing results are illustrated in Table 1. Compare performance testing results of Embodiment 1 with those of Comparative Embodiments 1 to 2. It can be seen from Table 1 that, under the condition that other materials and process operations for preparing batteries are the same, Comparative Embodiment 1 uses two layers of the first separator as a composite separator, and Comparative Example 2 uses two layers of the second separator as a composite separator, thus electrolyte retentions and low-temperature pulses of the prepared batteries are lower than those of Embodiment 1. This indicates that compared with Comparative Embodiments 1 to 2, in Embodiment 1, by assembling a first separator (nonwoven separator or cellulose separator) and a second separator (fiberglass separator) as the composite separator, and regulating a porosity of the first separator and a porosity of the second separator, the first separator and the second separator can be in synergy, thus on the premise of ensuring that the composite separator has good mechanical properties, an electrolyte wettability of the composite separator can be improved effectively, thereby enhancing a low-temperature pulse and lithium-ion transport kinetics of a lithium battery using the composite separator.

By comparing the performance testing results of Embodiment 1 with those of Comparative Embodiments 3 and 5, it can be found that, the electrolyte retentions and the low-temperature pulses of the prepared batteries in Comparative Embodiments 3 and 5 are lower than those of Embodiment 1. The reason is that, under the condition that other materials and process operations for preparing batteries are the same, a porosity of the first separator 1 in Comparative Embodiment 3 and a porosity of the second separator 2 in Comparative Embodiment 5 are excessively low, leading to poor electrolyte wettability of the composite separators and is not conducive to providing good transmission channels for lithium ions, thereby deteriorating the electrolyte retentions and the low-temperature pulses of the prepared batteries. At the same time, the mechanical strength of the composite separator is improved since a filament density of the composite separator is increased. By comparing the performance testing results of Embodiment 1 with those of Comparative Embodiment 4, it can be found that the electrolyte retention and the low-temperature pulse of the battery prepared in Comparative Embodiment 4 are higher than those of Embodiment 1. The reason is that, under the condition that other materials and process operations for preparing batteries are the same, the porosity of the first separator 1 in Comparative Embodiment 4 is excessively high, which is conducive to a steady transmission of lithium ions in the composite separator, thereby increasing the electrolyte retention and improving the low-temperature pulse of the battery. However, the mechanical strength of the composite separator is lowered since the filament density of the composite separator is decreased.

Compare the performance testing results of Embodiment 1 with those of Embodiments 2 to 5. It can be seen from Table 1 that, under the condition that other materials and process operations for preparing the batteries are the same, a porosity of the first separator 1 in Embodiment 3 is higher than 70%, thus the mechanical properties of the prepared composite separator are poorer than those of Embodiment 1, a porosity of the second separator 2 in Embodiment 4 is lower than 80%, thus the electrolyte retention and the low-temperature pulse of the prepared battery is lower than those of Embodiment 1. This indicates that compared with Embodiment 3 and 4, in Embodiment 1, by reasonably configuring the porosity of the first separator and the porosity of the second separator, the composite separator prepared by assembling the first separator and the second separator can have excellent electrolyte retention capacity, overall stability, and mechanical properties, thereby comprehensively improving lithium-ion transport kinetics and a safety performance of the lithium battery applying it.

Compare the performance testing results of Embodiment 1 with those of Embodiments 6 to 7. It can be seen from Table 1 that, under the condition that other materials and process operations for preparing the batteries are the same, in Embodiment 6, a length-to-diameter ratio of glass fiber filaments in the first separator 1 is higher than 2000:1, in Embodiment 7, a length-to-diameter ratio of glass fiber filaments in the first separator 1 is lower than 500:1, thus the mechanical properties of the prepared composite separators are poorer than those of Embodiment 1, the electrolyte retentions and the low-temperature pulse of the prepared batteries are lower than those of Embodiment 1. This indicates that compared with Embodiments 6 to 7, in Embodiment 1, by regulating the length-to-diameter ratio of the glass fiber filaments, it is conducive to improving an overall strength of the composite separator and reducing a local stress concentration; at the same time, it is also conducive to improving the dispersity and the uniformity of glass fiber filaments, so that a good electrolyte wettability is maintained, thereby enhancing a comprehensive performance of the composite separator.

## Claims

1. A composite separator, comprising:
a first separator and a second separator disposed in sequence, wherein the first separator is a nonwoven separator or a cellulose separator, and the second separator is a fiberglass separator; and a porosity of the first separator is not higher than a porosity of the second separator.

2. The composite separator according to claim 1, wherein the porosity of the first separator is within a range of 50% to 90%, and the porosity of the second separator is within a range of 50% to 90%.

3. The composite separator according to claim 2, wherein the porosity of the first separator is within a range of 50% to 70%, and the porosity of the second separator is within a range of 80% to 90%.

4. The composite separator according to claim 1, wherein the fiberglass separator comprises glass fiber filament, wherein a length-to-diameter ratio of the fiberglass is within a range of (1000 - 2000) : 1.

5. The composite separator according to claim 4, wherein a mean diameter of the glass fiber filament is within a range of 0.5 µm to 8 µm, and a mean length of the glass fiber filament is within a range of 0.5 mm to 2 mm.

6. The composite separator according to claim 1, wherein a ratio of a thickness of the first separator to a thickness of the second separator is within a range of (0.025 - 0.1) : (0.1 - 0.4).

7. The composite separator according to claim 5, wherein a thickness of the first separator is within a range of 0.025 mm to 0.2 mm, and a thickness of the second separator is within a range of 0.1 mm to 0.4 mm.

8. The composite separator according to claim 1, wherein the first separator is the nonwoven separator, and the nonwoven separator is a polyethylene (PE) nonwoven separator, a polypropylene (PP) nonwoven separator, a polyimide (PI) nonwoven separator, or a polyethylene terephthalate (PET) nonwoven separator.

9. The composite separator according to claim 1, wherein the first separator is the cellulose separator, and the cellulose separator is a cellulose acetate separator, a methylcellulose separator, an ethylcellulose separator, a carboxymethylcellulose separator, or a hydroxyl cellulose separator.

10. A lithium battery, comprising the composite separator according to any one of claims 1 to 9.
